# EUROPEAN PATENT APPLICATION

(11) **EP 4 764 765 A1**
(43) Date of publication of application: **24.06.2026**
(21) Application number: 25190236.7
(22) Date of filing: 17.07.2025
(51) Int. Cl.: G05F 1/67

(54) **POWER CONVERSION APPARATUS, MAXIMUM POWER POINT TRACKING METHOD, CONTROL APPARATUS AND MEDIUM**

(30) Priority: 19.12.2024 CN 202411887244
(71) Applicant: Sungrow Power Supply Co., Ltd., Hefei, Anhui 230088 (CN)
(72) Inventor: CAO, Jinhu, Hefei, Anhui (CN); FENG, Jigui, Hefei, Anhui (CN); HU, Fanyu, Hefei, Anhui (CN); LI, Xin, Hefei, Anhui (CN); PENG, Lianglin, Hefei, Anhui (CN)
(74) Representative: Zacco Norway AS

(57) **Abstract**

A power conversion apparatus, an MPPT method, a control apparatus, and a medium are provided. The power conversion apparatus includes a power conversion circuit and a control unit configured to: switch the power conversion circuit from a first operating state to a second operating state; and switch, in response to at least one of input power and output power of the power conversion circuit in the second operating state less than that in the first operating state, the power conversion circuit back to the first operating state. Within the MPPT cycle, a total duration for which the power conversion circuit is switched from the first operating state to the second operating state and maintained at the second operating state is less than a total duration for which the power conversion circuit is switched from the second operating state to the first operating state and maintained at the first operating state.

## Description

### FIELD

The present disclosure relates to the technical field of photovoltaic power generation, and in particular to a power conversion apparatus, and a maximum power point tracking method, a control apparatus and a medium.

### BACKGROUND

Photovoltaic power generation systems utilizing solar energy for power generation occupy a significant position in supply of renewable energy as renewable energy technologies keep advancing. Maximum power point tracking (MPPT) is a key technology in the photovoltaic power generation systems, and is for regulating an operating voltage of a photovoltaic module in a real-time manner to maintain an output power of a photovoltaic power generation system at a high level.

However, a conventional MPPT method results in some energy loss during a maximum power point (MPP) tracking process.

### SUMMARY

A power conversion apparatus, and an MPPT method, a control apparatus and a medium are provided according to some embodiments of the present disclosure, to reduce energy loss during an MPPT process.

A power conversion apparatus is provided according to an embodiment of the present disclosure, and includes a power conversion circuit and a control unit. The power conversion circuit is configured to connect a photovoltaic module. The control unit is configured to switch an operating state of the power conversion circuit to regulate a voltage of an input end of the power conversion circuit. Within an MPPT cycle, the control unit is configured to: switch the power conversion circuit from a first operating state to a second operating state, and switch, in response to the power conversion circuit in the second operating state less than the power conversion circuit in the first operating state in at least one of an input power and an output power, the power conversion circuit back to the first operating state. A total duration for which the power conversion circuit is switched from the first operating state to the second operating state and maintained at the second operating state is less than a total duration for which the power conversion circuit is switched from the second operating state to the first operating state and maintained at the first operating state.

In some embodiments, the first operating state is an initial state of the power conversion circuit at a start time instant of the MPPT cycle. For switching the power conversion circuit from the first operating state to the second operating state, the control unit is further configured to switch the power conversion circuit from the first operating state to the second operating state at the start time instant of the MPPT cycle, and maintain, in response to the power conversion circuit in the second operating state less than the power conversion circuit in the first operating state in at least one of the input power and the output power, the power conversion circuit at the second operating state until the total duration for which the power conversion circuit is switched from the first operating state to the second operating state and maintained at the second operating state reaches a first duration. For switching the power conversion circuit back to the first operating state, the control unit is further configured to: switch the power conversion circuit back to the first operating state when the first duration expires, and maintain the power conversion circuit at the first operating state until the MPPT cycle ends. The total duration for which the power conversion circuit is switched from the second operating state to the first operating state and maintained at the first operating state is a second duration, where the first duration is less than the second duration.

In some embodiments, an initial state of the power conversion circuit at a start time instant of the MPPT cycle is a third operating state. The control unit is further configured to switch, at the start time instant of the MPPT cycle, the power conversion circuit from the third operating state to the first operating state, and maintain, in response to the power conversion circuit in the first operating state greater than the power conversion circuit in the third operating state in at least one of the input power and the output power, the power conversion circuit at the first operating state until a total duration for which the power conversion circuit is switched from the third operating state to the first operating state and maintained at the first operating state reaches a third duration. For switching the power conversion circuit from the first operating state to the second operating state, the control unit is further configured to: switch the power conversion circuit from the first operating state to the second operating state when the third duration expires, and maintain, in response to the power conversion circuit in the second operating state less than the power conversion circuit in the first operating state in at least one of the input power and the output power, the power conversion circuit at the second operating state until a total duration for which the power conversion circuit is switched from the first operating state to the second operating state and maintained at the second operating state reaches a fourth duration. For switching the power conversion circuit back to the first operating state, the control unit is further configured to: switch the power conversion circuit back to the first operating state when the fourth duration expires, and maintain the power conversion circuit at the first operating state until the MPPT cycle ends. The total duration for which the power conversion circuit is switched from the second operating state to the first operating state and maintained at the first operating state is a fifth duration, where the fourth duration is less than at least one of the fifth duration and the third duration.

In some embodiments, the voltages of the input end of the power conversion circuit sequentially increase when the power conversion circuit operates in the third operating state, the first operating state and the second operating state, respectively. Alternatively, the voltages of the input end of the power conversion circuit sequentially decrease when the power conversion circuit operates in the third operating state, the first operating state and the second operating state, respectively.

In some embodiments, the power conversion circuit is a direct current-direct current (DC-DC) conversion circuit or an inverter circuit.

A maximum power point tracking (MPPT) method is provided according to the embodiments of the present disclosure, and includes: switching a power conversion circuit from a first operating state to a second operating state within an MPPT cycle, where the power conversion circuit is configured to connect a photovoltaic module, and switching of an operating state of the power conversion circuit regulates a voltage of an input end of the power conversion circuit; switching, in response to the power conversion circuit in the second operating state less than the power conversion circuit in the first operating state in at least one of an input power and an output power, the power conversion circuit back to the first operating state. A total duration for which the power conversion circuit is switched from the first operating state to the second operating state and maintained at the second operating state is less than a total duration for which the power conversion circuit is switched from the second operating state to the first operating state and maintained at the first operating state.

In some embodiments, the first operating state is an initial state of the power conversion circuit at a start time instant of the MPPT cycle. The switching the power conversion circuit from the first operating state to the second operating state includes: switching the power conversion circuit from the first operating state to the second operating state at the start time instant of the MPPT cycle; and maintaining, in response to the power conversion circuit in the second operating state less than the power conversion circuit in the first operating state in at least one of the input power and the output power, the power conversion circuit at the second operating state until the total duration for which the power conversion circuit is switched from the first operating state to the second operating state and maintained at the second operating state reaches a first duration. The switching the power conversion circuit back to the first operating state includes: switching the power conversion circuit back to the first operating state when the first duration expires, and maintaining the power conversion circuit at the first operating state until the MPPT cycle ends. The total duration for which the power conversion circuit is switched from the second operating state to the first operating state and maintained at the first operating state is a second duration, where the first duration is less than the second duration.

In some embodiments, an initial state of the power conversion circuit at a start time instant of the MPPT cycle is a third operating state. The MPPT method further includes: switching, at the start time instant of the MPPT cycle, the power conversion circuit from the third operating state to the first operating state, and maintaining, in response to the power conversion circuit in the first operating state greater than the power conversion circuit in the third operating state in at least one of the input power and the output power, the power conversion circuit at the first operating state until a total duration for which the power conversion circuit is switched from the third operating state to the first operating state and maintained at the first operating state reaches a third duration. The switching the power conversion circuit from the first operating state to the second operating state includes: switching the power conversion circuit from the first operating state to the second operating state when the third duration expires, and maintaining, in response to the power conversion circuit in the second operating state less than the power conversion circuit in the first operating state in at least one of the input power and the output power, the power conversion circuit at the second operating state until a total duration for which the power conversion circuit is switched from the first operating state to the second operating state and maintained at the second operating state reaches a fourth duration. The switching the power conversion circuit back to the first operating state includes: switching the power conversion circuit back to the first operating state when the fourth duration expires, and maintaining the power conversion circuit at the first operating state until the MPPT cycle ends. The total duration for which the power conversion circuit is switched from the second operating state to the first operating state and maintained at the first operating state is a fifth duration, and the fourth duration is less than at least one of the fifth duration and the third duration.

In some embodiments, the voltages of the input end of the power conversion circuit sequentially increase when the power conversion circuit operates in the third operating state, the first operating state and the second operating state, respectively. Alternatively, the voltages of the input end of the power conversion circuit sequentially decrease when the power conversion circuit operates in the third operating state, the first operating state and the second operating state, respectively.

In some embodiments, the power conversion circuit is a direct current-direct current (DC-DC) conversion circuit or an inverter circuit.

A photovoltaic system is provided according to an embodiment of the present disclosure, and includes the power conversion apparatus described in any of the above embodiments.

A control apparatus is provided according to an embodiment of the present disclosure, and includes a memory and a processor. The memory is configured to store a program, instructions or codes. The processor is configured to execute the program, instructions or the codes in the memory to perform the MPPT method described in any of the above embodiments.

A storage medium storing a computer program is provided according to an embodiment of the present disclosure. The computer program is loaded by the processor to perform the MPPT method described in any of the above embodiments.

In some embodiments of the present disclosure, the power conversion circuit of the power conversion apparatus is configured to connect a photovoltaic module. The control unit of the power conversion apparatus is configured to switch an operating state of the power conversion circuit to regulate a voltage of an input end of the power conversion circuit, thereby regulating an operating voltage of the photovoltaic module connected to the power conversion circuit. In an embodiment, the control unit may switch the operating state of the power conversion circuit in each MPPT cycle to perturb the operating voltage of the photovoltaic module, thereby tracking a maximum power point. Within the MPPT cycle, the control unit may switch the power conversion circuit from the first operating state to the second operating state, and switch, in response to the power conversion circuit in the second operating state less than the power conversion circuit in the first operating state in at least one of the input power and the output power, the power conversion circuit back to the first operating state. Additionally, the control unit further controls a total duration for which the power conversion circuit is switched from the first operating state to the second operating state and maintained at the second operating state to be less than a total duration for which the power conversion circuit is switched from the second operating state to the first operating state and maintained at the first operating state. As the input power or output power of the power conversion circuit in the first operating state is greater than that in the second operating state, the power conversion circuit is maintained at an operating state with a lower power for a shorter duration within the MPPT cycle, thus reducing energy loss during an MPPT process.

### BRIEF DESCRIPTION OF THE DRAWINGS

In order to more clearly describe technical solutions in embodiments of the present disclosure or in the conventional technology, the drawings to be used in the description of the embodiments or the conventional technology are briefly described below. Apparently, the drawings described in the following description show only some embodiments of the present disclosure, and other drawings may be obtained by those skilled in the art from the drawings without any creative effort.
FIG. 1 is a schematic diagram of a power conversion apparatus according to an embodiment of the present disclosure;
FIG. 2 is a schematic diagram of switching a power conversion circuit between a first operating state and a second operating state according to an embodiment of the present disclosure;
FIG. 3 is a schematic diagram of switching a power conversion circuit between a third operating state, a first operating state and a second operating state according to an embodiment of the present disclosure;
FIG. 4 is a schematic flowchart of a MPPT method according to an embodiment of the present disclosure;
FIG. 5 is a schematic diagram of a photovoltaic system according to an embodiment of the present disclosure;
FIG. 6 is a schematic diagram of a photovoltaic system according to an embodiment of the present disclosure;
FIG. 7 is a schematic diagram of a photovoltaic system according to an embodiment of the present disclosure; and
FIG. 8 is a schematic diagram of a control apparatus according to an embodiment of the present disclosure.

### DETAILED DESCRIPTION

Technical solutions of embodiments of the present disclosure are clearly and completely described hereinafter in conjunction with the drawings of the embodiments of the present disclosure. Apparently, the embodiments described are only some embodiments of the present disclosure, rather than all embodiments.

In the description of the embodiments of the present disclosure, it should be understood that the terms "first" and "second" are merely for illustrative purposes and should not be construed as indicating or implying relative importance or implicitly specifying the quantity of indicated technical features. Accordingly, features designated as "first" or "second" may explicitly or implicitly include one or more of the features. In the description of the embodiments of the present disclosure, the term "multiple" and "a plurality of" denote two or more, unless otherwise explicitly defined.

An MPPT process according to the related technology may include multiple perturbation cycles. A control unit performs a voltage perturbation on a photovoltaic module once in each perturbation cycle to change an operating point of the photovoltaic module. Furthermore, the control unit determines a change in an output power of the photovoltaic module before and after the perturbation within each perturbation cycle to determine a voltage perturbation direction within a next perturbation cycle.

If the output power of the photovoltaic module decreases after the control unit perturbs the operating voltage of the photovoltaic module, the photovoltaic module is maintained at a current operating point until the next perturbation cycle starts. Furthermore, the control unit perturbs the operating voltage of the photovoltaic module in an opposite perturbation direction within the next perturbation cycle.

For example, within an N-1-th perturbation cycle, the control unit increases the operating voltage of the photovoltaic module, to regulate the operating point of the photovoltaic module. After the operating voltage of the photovoltaic module increases, the control unit may detect that the output power of the photovoltaic module decreases from 400W to 350W. In this case, the output power of the photovoltaic module is maintained at 350W until the N-1-th perturbation cycle ends. The control unit changes a perturbation direction of the operating voltage, that is, decreases the operating voltage of the photovoltaic module to increase the output power of the photovoltaic module, only when the N-th perturbation cycle starts.

With the related technology, if the output power of the photovoltaic module decreases in response to a voltage perturbation, the control unit does not control the photovoltaic module to operate at an operating point with a high output power in time, resulting in some energy loss during the MPPT process and impairing MPPT efficiency.

In view of this, a power conversion apparatus, an MPPT method, a control apparatus and a medium are provided according to embodiments of the present disclosure. Within an MPPT cycle, the control unit switches the power conversion circuit from a first operating state to a second operating state, to regulate an operating voltage of a photovoltaic module connected to the power conversion circuit. In response to an input power and/or output power of the power conversion circuit in the second operating state less than an input power and/or output power of the power conversion circuit in the first operating state, the control unit switches the power conversion circuit back to the first operating state. Within the MPPT cycle, the control unit controls a total duration for which the power conversion circuit is switched from the first operating state to the second operating state and maintained at the second operating state to be less than a total duration for which the power conversion circuit is switched from the second operating state to the first operating state and maintained at the first operating state, thus reducing energy loss during the MPPT process and improving MPPT efficiency.

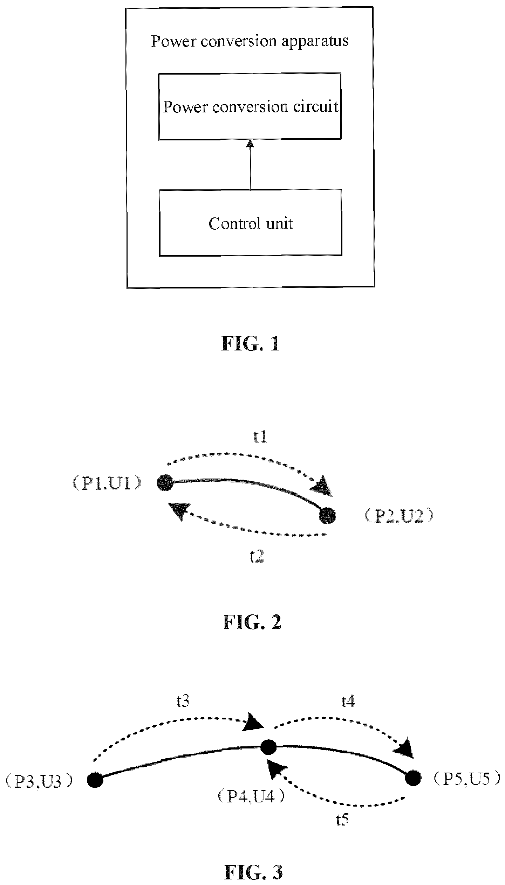

Referring to FIG. 1, a power conversion apparatus is provided according to an embodiment of the present disclosure. The power conversion apparatus includes a power conversion circuit and a control unit. The power conversion circuit is configured to connect a photovoltaic module. The control unit is configured to switch an operating state of the power conversion circuit to regulate a voltage of an input end of the power conversion circuit. Within an MPPT cycle, the control unit is configured to: switch the power conversion circuit from a first operating state to a second operating state, and switch, in response to an input power and/or output power of the power conversion circuit in the second operating state less than an input power and/or output power of the power conversion circuit in the first operating state, the power conversion circuit back to the first operating state. A total duration for which the power conversion circuit is switched from the first operating state to the second operating state and maintained at the second operating state is less than a total duration for which the power conversion circuit is switched from the second operating state to the first operating state and maintained at the first operating state.

The power conversion apparatus is a device for performing conversion on electrical energy.

The power conversion apparatus includes the power conversion circuit. The power conversion circuit can realize conversion between various forms of electrical energy.

In an embodiment, the power conversion circuit may be a direct current-direct current (DC-DC) conversion circuit, for example, a Boost circuit, a Buck circuit or a bidirectional Buck-Boost circuit. Accordingly, an input end of the DC-DC conversion circuit is configured to connect the photovoltaic module. Thus, the control unit may switch the operating state of the DC-DC conversion circuit to regulate the voltage of the input end of the power conversion circuit, thereby regulating the operating voltage of the photovoltaic module connected to the power conversion circuit. In this way, the output power of the photovoltaic module is changed accordingly.

Alternatively, the power conversion circuit may be an inverter circuit. Accordingly, the photovoltaic module is configured to connect a DC bus of the inverter circuit. Thus, the control unit may switch the operating state of the inverter circuit to regulate the operating voltage of the photovoltaic module connected to the inverter circuit, thereby regulating the output power of the photovoltaic module. In an embodiment, the control unit may modify a voltage of the DC bus of the inverter circuit to regulate the operating voltage of the photovoltaic module.

The input power or output power of the power conversion circuit may be approximately considered as the output power of the photovoltaic module. Alternatively, the input power or output power of the power conversion circuit may be considered to be positively correlated with the output power of the photovoltaic module.

The photovoltaic module is an apparatus for converting solar energy into DC electrical energy. A quantity of the photovoltaic module connected to the input end of the power conversion circuit is one or more. In a case where the input end is connected to multiple photovoltaic modules, the multiple photovoltaic modules may be formed into a photovoltaic string, a photovoltaic array, or the like, which is not limited in the embodiment of the present disclosure.

The control unit is a control device for controlling the operating state of the power conversion circuit. In an embodiment, the control unit modifies a duty cycle of a semiconductor component in the power conversion circuit to switch the operating state of the power conversion circuit.

In some embodiments, the power conversion apparatus may be an MPPT controller that is independently arranged. Accordingly, the control unit is a control apparatus in the MPPT controller. Alternatively, the power conversion apparatus may be a photovoltaic inverter integrated with functions of the MPPT controller. Implementations of the power conversion apparatus and the control unit are not limited in the embodiment of the present disclosure.

The MPPT cycle is a control cycle of the MPPT process. Within each MPPT cycle, the control unit may switch the operating state of the power conversion circuit to perturb the operating voltage of the photovoltaic module connected to the power conversion circuit, determine a change in the input power or output power of the power conversion circuit before and after the perturbation, and determine whether to continue to switch the operating state of the power conversion circuit based on the change.

The first operating state and the second operating state are different operating states of the power conversion circuit within a same MPPT cycle. In an embodiment, an operating parameter of the power conversion circuit in the first operating state differs from that in the second operating state. In an embodiment, a duty cycle of the semiconductor component in the power conversion circuit in the first operating state differs from that in the second operating state.

Within an MPPT cycle, the control unit may switch the power conversion circuit between at least two operating states.

In an embodiment, within the MPPT cycle, the control unit switches the power conversion circuit from the first operating state to the second operating state, to regulate the operating voltage of the photovoltaic module. In addition, upon detecting an increase in the output power of the photovoltaic module, the control unit may maintain the power conversion circuit at the second operating state until the current MPPT cycle ends.

In an embodiment, within the MPPT cycle, the control unit switches the power conversion circuit from a third operating state to the first operating state and to further switch the power conversion circuit from the first operating state to the second operating state. If the output power of the photovoltaic module continuously increases during the above process, the control unit may maintain the power conversion circuit at the second operating state until the current MPPT cycle ends. The third operating state is different from the first operating state and the second operating state.

Within the MPPT cycle, in a case that the control unit determines that an input power and/or output power of the power conversion circuit in the second operating state is less than an input power and/or output power of the power conversion circuit in the first operating state after switching the power conversion circuit from the first operating state to the second operating state, the control unit may switch the power conversion circuit back to the first operating state. Due to a relatively low output power of the photovoltaic module in the second operating state, the control unit may control the total duration for which the power conversion circuit is switched from the first operating state to the second operating state and maintained at the second operation state to be less than the total duration for which the power conversion circuit is switched from the second operating state to the first operating state and maintained at the first operating state within the current MPPT cycle. That is, the photovoltaic module operates at the operating point with a high output power for a longer duration within the current MPPT cycle, effectively improving MPPT efficiency.

In some embodiments, the first operating state is an initial state of the power conversion circuit at a start time instant of the MPPT cycle. The power conversion circuit is switched from the first operating state to the second operating state by: switching the power conversion circuit from the first operating state to the second operating state at the start time instant of the MPPT cycle, and maintaining, in response to the input power and/or output power of the power conversion circuit in the second operating state less than the input power and/or output power of the power conversion circuit in the first operating state, the power conversion circuit at the second operating state until the total duration for which the power conversion circuit is switched from the first operating state to the second operating state and maintained at the second operating state reaches a first duration. The power conversion circuit is switched back to the first operating state by: switching the power conversion circuit back to the first operating state when the first duration expires, and maintaining the power conversion circuit at the first operating state until the MPPT cycle ends. The total duration for which the power conversion circuit is switched from the second operating state to the first operating state and maintained at the first operating state is a second duration, where the first duration is less than the second duration.

The initial state is the operating state of the power conversion circuit at the start time instant of the MPPT cycle. Within consecutive MPPT cycles, an initial state of a current MPPT cycle may be an operating state of the power conversion circuit at the end of a previous MPPT cycle.

In the embodiment, in a case that the output power of the photovoltaic module decreases after the power conversion circuit is switched from the first operating state to the second operating state, the first duration is the total duration for which the control unit switches the power conversion circuit from the first operating state to the second operating state and maintains the power conversion circuit at the second operating state. That is, the first duration includes a duration for which the power conversion circuit is switched from the first operating state to the second operating state and a duration for which the power conversion circuit is maintained at the second operating state after switching to the second operating state.

In the embodiment, in a case that the output power of the photovoltaic module decreases after the power conversion circuit is switched from the first operating state to the second operating state, the second duration is the total duration for which the control unit switches the power conversion circuit from the second operating state to the first operating state and maintains the power conversion circuit at the first operating state. That is, the second duration includes a duration for which the power conversion circuit is switched from the second operating state back to the first operating state and a duration for which the power conversion circuit is maintained at the first operating state after switching back to the first operating state.

In the embodiment, within the MPPT cycle, the control unit controls the power conversion circuit to switch between the first operating state and the second operating state.

In an embodiment, the initial state at the start time instant of the MPPT cycle is the first operating state, and the control unit switches the power conversion circuit to the second operating state at the start time instant. After the power conversion circuit is stabilized at the second operating state, the control unit acquires an input voltage and an input current of the power conversion circuit and calculates the input power of the power conversion circuit based on the input voltage and input current, or acquires an output voltage and an output current of the power conversion circuit and calculates the output power of the power conversion circuit based on the output voltage and output current. In a case that the input power, the output power or both of them of the power conversion circuit in the second operating state is less than that in the first operating state, the control unit may switch, when the first duration from the start time instant of the MPPT cycle as a start point expires, the power conversion circuit back to the first operating state until the MPPT cycle ends.

In the embodiment, a sum of the first duration and the second duration is equal to the MPPT cycle. As the first duration is less than the second duration, the photovoltaic module is maintained at the operating point with a high output power for a longer duration within the MPPT cycle.

For example, referring to FIG. 2, the operating voltage and the output power of the photovoltaic module connected to the power conversion circuit in the first operating state may be U1 and P1, respectively. An operating point of the photovoltaic module connected to the power conversion circuit in the first operating state is denoted as (P1,U1). The operating voltage and the output power of the photovoltaic module connected to the power conversion circuit in the second operating state may be U2 and P2, respectively. An operating point of the photovoltaic module connected to the power conversion circuit in the second operating state is denoted as (P2,U2).

At the start time instant of the MPPT cycle, the control unit may switch the operating point of the photovoltaic module from (P1,U1) to (P2,U2) by switching the operating state of the power conversion circuit. When the operating point of the photovoltaic module is stabilized at (P2,U2), the control unit may acquire the input power of the power conversion circuit by sampling the input voltage and input current of the power conversion circuit, or may acquire the output power of the power conversion circuit by sampling the output voltage and the output current of the power conversion circuit.

Assuming that the operating point of the photovoltaic module is stabilized at (P2,U2), the input power and the output power of the power conversion circuit are both P2. Assuming that the operating point of the photovoltaic module is stabilized at (P1,U1), the input power and the output power of the power conversion circuit are both P1.

If the control unit determines that P1 is greater than P2, that is, the input power and the output power of the power conversion circuit in the first operating state are greater than those in the second operating state, the control unit may maintain the power conversion circuit at the second operating state for a shorter duration, thereby reducing energy loss.

In an embodiment, t1 shown in FIG. 2 represents the total duration for which the operating point of the photovoltaic module is switched from (P1,U1) to (P2,U2) and maintained at (P2,U2), that is, t1 represents the first duration. t2 shown in FIG. 2 represents the total duration for which the operating point of the photovoltaic module is switched from (P2,U2) back to (P1,U1) and maintained at (P1,U1), that is, t2 represents the second duration. In the embodiment, t1 is less than t2, and the MPPT cycle is equal to the sum of t1 and t2. Thus, the photovoltaic module operates at the operating point with a high power for most of the time within the MPPT cycle, thereby reducing energy loss during the MPPT process and improving the MPPT efficiency.

In the embodiment, t2 is greater than half of the MPPT cycle, and t1 is less than half of the MPPT cycle.

In some embodiments, the initial state of the power conversion circuit at the start time instant of the MPPT cycle is a third operating state. The control unit is further configured to switch, at the start time instant of the MPPT cycle, the power conversion circuit from the third operating state to the first operating state, and maintain, in response to an input power and/or output power of the power conversion circuit in the first operating state greater than an input power and/or output power of the power conversion circuit in the third operating state, the power conversion circuit at the first operating state until a total duration for which the power conversion circuit is switched from the third operating state to the first operating state and maintained at the first operating state reaches a third duration. The power conversion circuit is switched from the first operating state to the second operating state by: switching the power conversion circuit from the first operating state to the second operating state when the third duration expires; and maintaining, in response to an input power and/or output power of the power conversion circuit in the second operating state less than an input power and/or output power of the power conversion circuit in the first operating state, the power conversion circuit at the second operating state until a total duration for which the power conversion circuit is switched from the first operating state to the second operating state and maintained at the second operating state reaches a fourth duration. The power conversion circuit is switched back to the first operating state by: switching the power conversion circuit back to the first operating state when the fourth duration expires, and maintaining the power conversion circuit at the first operating state until the MPPT cycle ends. The total duration for which the power conversion circuit is switched from the second operating state to the first operating state and maintained at the first operating state is a fifth duration, and the fourth duration is less than the fifth duration and/or the third duration.

The third operating state is an operating state of the power conversion circuit within the MPPT cycle, and may be different from the first operating state and the second operating state.

In the embodiment, the third operating state is the operating state of the power conversion circuit at the start time instant of the MPPT cycle.

In the embodiment, in a case that the output power of the photovoltaic module increases after the power conversion circuit is switched from the third operating state to the first operating state, the third duration is a total duration for which the control unit switches the power conversion circuit from the third operating state to the first operating state and maintains the power conversion circuit at the first operating state. That is, the third duration includes a duration for which the power conversion circuit is switched from the third operating state to the first operating state and a duration for which the power conversion circuit is maintained at the first operating state after the power conversion circuit is switched back to the first operating state.

In the embodiment, in a case that the output power of the photovoltaic module decreases after the power conversion circuit is switched from the first operating state to the second operating state, the fourth duration is a total duration for which the control unit switches the power conversion circuit from the first operating state to the second operating state and maintains the power conversion circuit at the second operating state. That is, the fourth duration includes a duration for which the power conversion circuit is switched from the first operating state to the second operating state and a duration for which the power conversion circuit is maintained at the second operating state after the power conversion circuit is switched to the second operating state.

In the embodiment, in a case that the output power of the photovoltaic module decreases after the power conversion circuit is switched from the first operating state to the second operating state, the fifth duration is a total duration for which the control unit further switches the power conversion circuit from the second operating state back to the first operating state and maintains the power conversion circuit at the first operating state,. That is, the fourth duration includes a duration for which the power conversion circuit is switched from the second operating state back to the first operating state and a duration for which the power conversion circuit is maintained at the first operating state after the power conversion circuit is switched back to the first operating state.

In the embodiment, within the MPPT cycle, the control unit controls the power conversion circuit to switch between the third operating state, the first operating state and the second operating state.

In an embodiment, the initial state at the start time instant of the MPPT cycle is the third operating state, and the control unit switches the power conversion circuit to the first operating state at the start time instant.

After the power conversion circuit is stabilized at the first operating state, the control unit acquires the input voltage and the input current of the power conversion circuit and calculates the input power of the power conversion circuit based on the input voltage and input current, or acquires the output voltage and the output current of the power conversion circuit and calculates the output power of the power conversion circuit based on output voltage and output current. In a case that the input power, the output power or both of them of the power conversion circuit in the first operating state is greater than that in the third operating state, the control unit may switch, when the third duration from the start time instant of the MPPT cycle as the start point expires, the power conversion circuit from the first operating state to the second operating state.

After the power conversion circuit is stabilized at the second operating state, the control unit may also acquire the input power or the output power of the power conversion circuit. In a case that the input power, the output power or both of them of the power conversion circuit in the second operating state is less than that in the first operating state, the control unit may switch the power conversion circuit from the first operating state to the second operating state and maintain the power conversion circuit at the second operating state until the fourth duration expires. The control unit may switch, when the fourth duration expires, the power conversion circuit back to the first operating state and maintain the power conversion circuit at the first operating state until the MPPT cycle ends.

In the embodiment, a sum of the fourth duration, the fifth duration and the third duration is equal to one MPPT cycle. The fourth duration may be set to be less than the fifth duration. In an embodiment, the fourth duration may be set to be less than the third duration. In an embodiment, the fourth duration may be set to be less than the fifth duration and the third duration.

The fifth duration and the third duration are both durations for which the power conversion circuit is maintained at the first operating state, and the input power or output power of the power conversion circuit in the first operating state is greater than those in the second operating state and the third operating state. Thus, the power conversion circuit is maintained at an operating state for a longer duration within the MPPT cycle, and the operate state enables the photovoltaic module to operate at an operating point with a high output power, thereby reducing energy loss of the photovoltaic module and improving MPPT efficiency.

For example, referring to FIG. 3, the operating voltage and the output power of the photovoltaic module connected to the power conversion circuit in the third operating state may be U3 and P3, respectively. An operating point of the photovoltaic module connected to the power conversion circuit in the third operating state is denoted as (P3,U3). The operating voltage and the output power of the photovoltaic module connected to the power conversion circuit in the first operating state may be U4 and P4, respectively. An operating point of the photovoltaic module connected to the power conversion circuit in the first operating state is denoted as (P4,U4). The operating voltage and the output power of the photovoltaic module connected to the power conversion circuit in the second operating state may be U5 and P5, respectively. An operating point of the photovoltaic module connected to the power conversion circuit in the second operating state is denoted as (P5,U5).

At the start time instant of the MPPT cycle, the control unit may switch the operating point of the photovoltaic module from (P3,U3) to (P4,U4) by switching the operating state of the power conversion circuit. When the operating point of the photovoltaic module is stabilized at (P4,U4), the control unit may acquire the input power of the power conversion circuit by sampling the input voltage and input current of the power conversion circuit, or may acquire the output power of the power conversion circuit by sampling the output voltage and the output current of the power conversion circuit.

Assuming that the operating point of the photovoltaic module is stabilized at (P4,U4), the input power and the output power of the power conversion circuit are both P4. Assuming that the operating point of the photovoltaic module is stabilized at (P3,U3), the input power and the output power of the power conversion circuit are both P3.

If the control unit determines that P4 is greater than P3, that is, the input power or the output power of the power conversion circuit in the first operating state are greater than those in the third operating state, the control unit may maintain the power conversion circuit at the first operating state for a longer duration. That is, the third duration may be set to a long duration.

Furthermore, when a duration for which the power conversion circuit is maintained at the first operating state reaches the third duration, the control unit may switch the operating point of the photovoltaic module from (P4,U4) to (P5,U5) by switching the operating state of the power conversion circuit.

Assuming that the operating point of the photovoltaic module is stabilized at (P5,U5), the input power and the output power of the power conversion circuit are both P5.

If the control unit determines that P4 is greater than P5, that is, the input power or the output power of the power conversion circuit in the first operating state are greater than the input power or the output power of the power conversion circuit in the second operating state, the control unit may maintain the power conversion circuit at the second operating state for a shorter duration. That is, the fourth duration may be set to a short duration.

When the fourth duration expires, the control unit switches the power conversion circuit back to the first operating state and maintains the power conversion circuit at the first operating state until the MPPT cycle ends. The fifth duration is a duration for which the power conversion circuit is switched to the first operating state and maintained at the first operating state. The fifth duration may be set to a long duration.

In an embodiment, t3 shown in FIG. 3 represents the total duration for which the operating point of the photovoltaic module is switched from (P3,U3) to (P4,U4) and maintained at (P4,U4), that is, t3 represents the third duration. t4 shown in FIG. 3 represents the total duration for which the operating point of the photovoltaic module is switched from (P4,U4) to (P5,U5) and maintained at (P5,U5), that is, t4 represents the fourth duration. t5 shown in FIG. 3 represents the total duration for which the operating point of the photovoltaic module is switched from (P5,U5) back to (P4,U4) and maintained at (P4,U4), that is, t5 represents the fifth duration. In the embodiment, t4 is less than t5, t4 is less than t3, and the MPPT cycle is equal to the sum of t4, t5 and t3. Both t5 and t3 are durations in which the power conversion circuit is in the operating state that enables the photovoltaic module to operate at the operating point with a high power. Thus, the photovoltaic module operates at the operating point with a high power for most of the time within the MPPT cycle, thereby reducing energy loss during the MPPT process and improving MPPT efficiency.

In some embodiments, the voltages of the input end of the power conversion circuit sequentially increase when the power conversion circuit operates in the third operating state, the first operating state and the second operating state, respectively. Alternatively, the voltages of the input end of the power conversion circuit sequentially decrease when the power conversion circuit operates in the third operating state, the first operating state and the second operating state, respectively.

Within the MPPT cycle, the control unit may switch the power conversion circuit from the third operating state to the first operating state and to the second operating state sequentially. During switching the operating state of the power conversion circuit, the voltage of the input end of the power conversion circuit only increases or only decreases. In an embodiment, the voltage of the input end of the power conversion circuit only increases. Alternatively, the voltage of the input end of the power conversion circuit only decreases.

For example, the voltage of the input end of the power conversion circuit in the first operating state is 5V greater than the voltage of the input end of the power conversion circuit in the third operating state. The voltage of the input end of the power conversion circuit in the second operating state is 5V greater than the voltage of the input end of the power conversion circuit in the first operating state.

In some embodiments, within the MPPT cycle, the control unit may control the power conversion circuit to switch between three or more operating states. Accordingly, during the process of switching the operating state, when detecting a decrease in the input power or output power of the power conversion circuit, the control unit may control a total duration for which the power conversion circuit is switched to an operating state where a power decreases and maintained at the operating state to be less than a total duration for which the power conversion circuit is switched back to a previous operating state and maintained at the previous operating state, thereby reducing energy loss and improving MPPT efficiency.

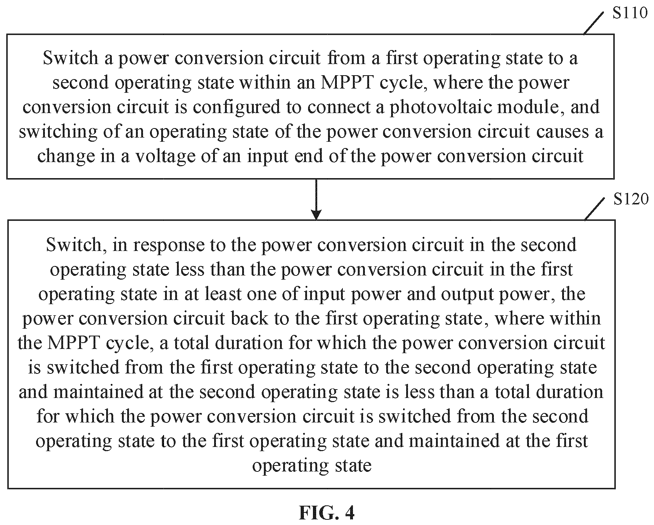

Referring to FIG. 4, an MPPT method is provided according to an embodiment of the present disclosure, and includes the following steps S110 and S210.

In step S110, the power conversion circuit is switched from the first operating state to the second operating state within an MPPT cycle, where the power conversion circuit is configured to connect a photovoltaic module, and switching of an operating state of the power conversion circuit regulates a voltage of an input end of the power conversion circuit.

In step S210, the power conversion circuit is switched back to the first operating state, in response to an input power and/or output power of the power conversion circuit in the second operating state less than an input power and/or output power of the power conversion circuit in the first operating state. Within the MPPT cycle, a total duration for which the power conversion circuit is switched from the first operating state to the second operating state and maintained at the second operating state is less than a total duration for which the power conversion circuit is switched from the second operating state to the first operating state and maintained at the first operating state.

In some embodiments, the first operating state is an initial state of the power conversion circuit at a start time instant of the MPPT cycle. The power conversion circuit is switched from the first operating state to the second operating state by: switching the power conversion circuit from the first operating state to the second operating state at the start time instant of the MPPT cycle, and maintaining, in response to the input power and/or output power of the power conversion circuit in the second operating state less than the input power and/or the output power of the power conversion circuit in the first operating state, the power conversion circuit at the second operating state until the total duration for which the power conversion circuit is switched from the first operating state to the second operating state and maintained at the second operating state reaches a first duration. The power conversion circuit is switched back to the first operating state by: switching the power conversion circuit back to the first operating state when the first duration expires, and maintaining the power conversion circuit at the first operating state until the MPPT cycle ends. The total duration for which the power conversion circuit is switched from the second operating state to the first operating state and maintained at the first operating state is a second duration, where the first duration is less than the second duration.

In some embodiments, an initial state of the power conversion circuit at a start time instant of the MPPT cycle is a third operating state. The MPPT method further includes switching, at the start time instant of the MPPT cycle, the power conversion circuit from the third operating state to the first operating state, and maintaining, in response to the input power and/or the output power of the power conversion circuit in the first operating state greater than an input power and/or an output power of the power conversion circuit in the third operating state, the power conversion circuit at the first operating state until a total duration for which the power conversion circuit is switched from the third operating state to the first operating state and maintained at the first operating state reaches a third duration. The power conversion circuit is switched from the first operating state to the second operating state by: switching the power conversion circuit from the first operating state to the second operating state when the third duration expires, and maintaining, in response to the input power and/or the output power of the power conversion circuit in the second operating state less than the input power and/or the output power of the power conversion circuit in the first operating state, the power conversion circuit at the second operating state until the total duration for which the power conversion circuit is switched from the first operating state to the second operating state and maintained at the second operating state reaches a fourth duration. The power conversion circuit is switched back to the first operating state by: switching the power conversion circuit back to the first operating state when the fourth duration expires, and maintaining the power conversion circuit at the first operating state until the MPPT cycle ends. The total duration for which the power conversion circuit is switched from the second operating state to the first operating state and is maintained at the first operating state is a fifth duration, and the fourth duration is less than the fifth duration and/or the third duration.

In some embodiments, the voltages of the input end of the power conversion circuit sequentially increase when the power conversion circuit operates in the third operating state, the first operating state and the second operating state, respectively. Alternatively, the voltages of the input end of the power conversion circuit sequentially decrease when the power conversion circuit operates in the third operating state, the first operating state and the second operating state, respectively.

In some embodiments, the power conversion circuit is a DC-DC conversion circuit or an inverter circuit.

Description of the MPPT method may refer to other embodiments and is not repeated in the embodiment of the present disclosure.

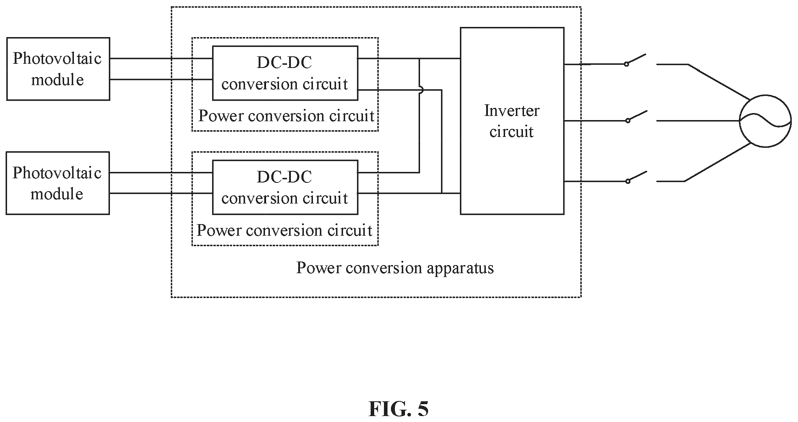

Referring to FIG. 5, FIG. 6 and FIG. 7, a photovoltaic system is provided according to an embodiment of the present disclosure. The photovoltaic system includes the power conversion apparatus described in any one of the embodiments of the present disclosure.

Referring to FIG. 5, the power conversion apparatus includes the power conversion circuit and the inverter circuit. The power conversion circuit includes a DC-DC conversion circuit. In an embodiment, the power conversion apparatus is a photovoltaic inverter including the DC-DC conversion circuit and the inverter circuit. Accordingly, a photovoltaic module in the photovoltaic system may be connected to the inverter circuit of the power conversion apparatus via the DC-DC conversion circuit of the power conversion apparatus.

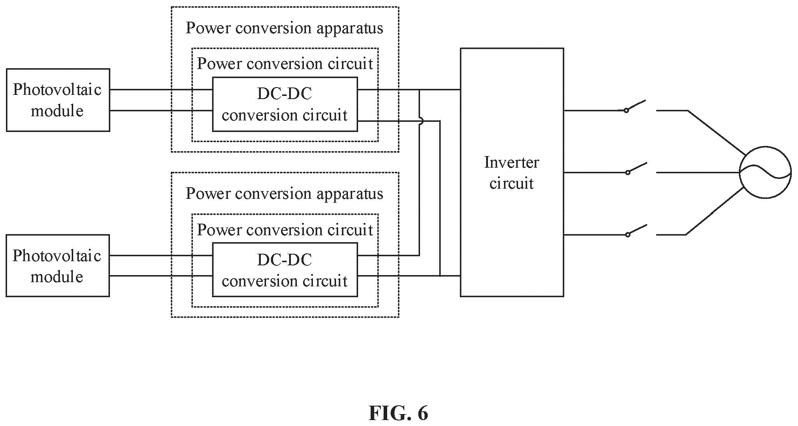

Referring to FIG. 6, the power conversion apparatus includes a power conversion circuit, and the power conversion circuit includes the DC-DC conversion circuit. Accordingly, the photovoltaic module in the photovoltaic system may be connected to the inverter circuit via the DC-DC conversion circuit of the power conversion apparatus.

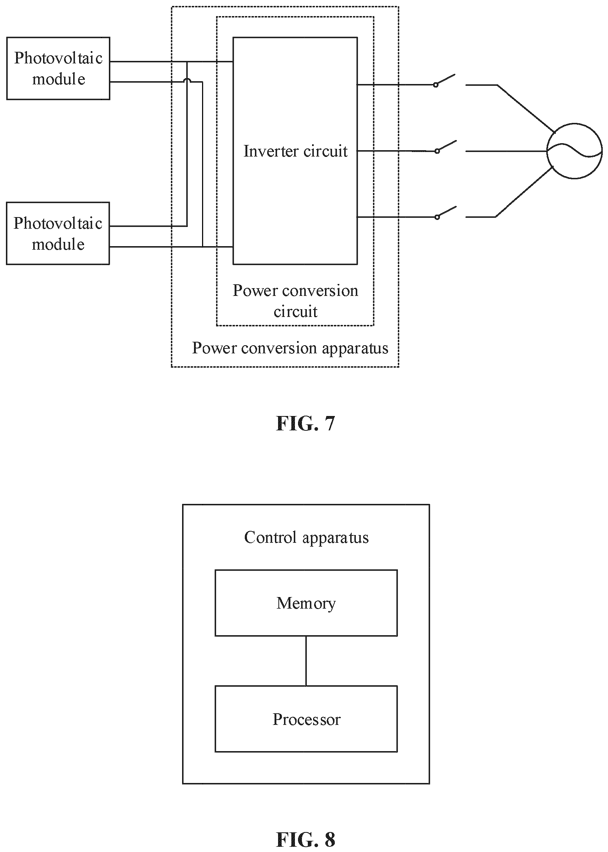

Referring to FIG. 7, the power conversion apparatus includes a power conversion circuit, and the power conversion circuit includes the inverter circuit. Accordingly, the photovoltaic module may be connected to the inverter circuit of the power conversion apparatus. The operating state of the inverter circuit is switched to regulate a voltage of the DC bus, thus regulating an operating voltage of the photovoltaic module.

In some embodiments, the power conversion apparatus may include the control unit. The control unit of the power conversion apparatus may include an MPPT controller configured to perform the MPPT method according to any one of the above embodiments.

Description of the photovoltaic system may be referred to other embodiments and is not repeated in the embodiment of the present disclosure.

Referring to FIG. 8, a control apparatus is provided according to an embodiment of the present disclosure. The control apparatus includes a memory and a processor. The memory is configured to store a program, instructions or codes. The processor is configured to execute the programs, instructions or codes in the memory to perform the MPPT method according to any one of the embodiments of the present disclosure.

The memory may be a Random Access Memory (RAM), a flash memory, a Read-Only Memory (ROM), an EPROM, a non-volatile ROM (Electronic Programmable ROM (EPROM)), a register, a hard disk, a removable disk, or the like, which is not limited herein in the embodiment of the present disclosure.

The memory may store computer instructions. The processor is configured to perform, when executing the computer instructions stored in the memory, the MPPT method according to any one of the embodiments of the present disclosure.

The above embodiments may be implemented in whole or in part by software, hardware, firmware, or any combination thereof. When the functions are implemented by using software, all or some of the functions may be implemented in a form of a computer program product. The computer program product includes one or multiple computer instructions. The computer program instructions are loaded and executed on a computer to generate processes or functions in whole or in part according to the embodiments of the present disclosure. The computer may be a general-purpose computer, a special-purpose computer, a computer network, or other programmable apparatuses. The computer instructions may be stored in a computer-readable storage medium or transmitted from one computer-readable storage medium to another. For example, the computer instructions may be transmitted from a website site, a computer, a server or a data center to another website site, another computer, another server or another data center in a wired manner (for example, through a coaxial cable, optical fiber, or digital subscriber line (DSL)) or in a wireless manner (for example, through infrared, radio, or microwave). The computer-readable storage medium may be any available medium capable of being accessed by a computer or include one or more data storage devices integrated by an available medium, such as a server and a data center. The available medium may be a magnetic medium (such as, a floppy disk, a hard disk or a magnetic tape), or a semiconductor medium (such as, a solid-state disk (SSDs), or the like.

A computer-readable storage medium is further provided according to an embodiment of the present disclosure, where a computer program is stored on the computer-readable storage medium. The computer program is loaded by a processor to perform the MPPT method according to any one of the embodiments of the present disclosure.

The computer-readable storage medium may be a Random Access Memory (RAM), a flash memory, a Read-Only Memory (ROM), an EPROM, a non-volatile ROM (Electronic Programmable ROM (EPROM)), a register, a hard disk, a removable disk or a storage medium in any other form within the present technical field.

It should be understood that the term "connection" in the above embodiments refers to "electrical connection", "communication connection", or the like, if connected circuits, modules, units, or the like, can transmit electrical signals or data to each other.

It should be understood that examples herein are merely intended to help those skilled in the art better understand the embodiments of the present disclosure, and are not intended to limit the scope of the present disclosure.

It should be understood that, in the embodiments of the present disclosure, numerical order of each process does not necessarily indicate the sequence of execution. The order in which each process is executed should be determined by its function and inherent logic, and should not impose any limitations on the implementation process of the embodiments of the present disclosure.

It should be understood that the embodiments described in the present disclosure may be implemented alone or in combination, which is not limited herein.

Unless otherwise specified, all technical and scientific terms used in the embodiments of the present disclosure have the same meanings as commonly understood by those skilled in the technical field of the present disclosure. The terms used in the present disclosure are for the purpose of describing specific embodiments only, and are not intended to limit the scope of the present disclosure. The term "and/or" used in the present disclosure includes any and all combinations of one or multiple associated listed items. The singular terms "a", "an", "the above" and "the" used in the embodiments of the present disclosure and the claims are intended to include their plural forms, unless the context clearly indicates otherwise.

Those skilled in the art can recognize that the units and algorithmic steps described in the examples described in connection with the embodiments disclosed herein can be implemented using electronic hardware, or through a combination of computer software and electronic hardware. Whether these functions are implemented in hardware or software depends on specific application and design constraints of the technical solution. Those skilled in the art may use different methods to implement the described functions for any specific application, but such implementations should not be considered beyond the scope of the present disclosure.

Those skilled in the art can clearly understand that for convenience and conciseness of the description, specific operating processes of the systems, apparatuses and units described above may be referred to the corresponding processes in the aforementioned method embodiments, and are not repeated herein.

In several embodiments of the present disclosure, it should be understood that the disclosed systems, apparatuses and methods may be implemented in other ways. The aforementioned apparatus embodiments are merely illustrative, for example, the division of the units merely represents logical function division; in practice, alternative divisions may be employed. For example, multiple units or components may be combined or integrated into another system, or some features may be ignored or not implemented. Additionally, the couplings, direct couplings or communication connections shown or discussed may be implemented through interfaces, and indirect couplings or communication connections of the apparatuses or units may be electrical, mechanical or of other forms.

The units described as separate components may be or may not be physically separated, and the components shown as units may be or may not be physical units, that is, they may be located in one position or may be distributed over multiple network units. Some or all of the units therein may be selected according to actual needs to implement the objectives of the embodiment of the present disclosures.

The foregoing descriptions are merely embodiments of the present disclosure, and the scope of protection of the present disclosure is not limited thereto. Any modification or substitution readily conceivable to those skilled in the art within the technical scope disclosed herein shall be encompassed within the scope of protection of the present disclosure. Therefore, the scope of protection of the present disclosure shall be determined by the scope of the claims.

## Claims

1. A power conversion apparatus, **characterized by** comprising:
a power conversion circuit, configured to connect a photovoltaic module; and
a control unit, configured to switch an operating state of the power conversion circuit to regulate a voltage of an input end of the power conversion circuit, wherein
within a maximum power point tracking (MPPT) cycle, the control unit is configured to:
switch the power conversion circuit from a first operating state to a second operating state; and
switch, in response to the power conversion circuit in the second operating state less than the power conversion circuit in the first operating state in at least one of an input power and an output power, the power conversion circuit back to the first operating state, wherein a total duration for which the power conversion circuit is switched from the first operating state to the second operating state and maintained at the second operating state is less than a total duration for which the power conversion circuit is switched from the second operating state to the first operating state and maintained at the first operating state.

2. The power conversion apparatus according to claim 1, wherein the first operating state is an initial state of the power conversion circuit at a start time instant of the MPPT cycle, and for switching the power conversion circuit from the first operating state to the second operating state, the control unit is further configured to:
switch the power conversion circuit from the first operating state to the second operating state at the start time instant of the MPPT cycle; and
maintain, in response to the power conversion circuit in the second operating state less than the power conversion circuit in the first operating state in at least one of the input power and the output power, the power conversion circuit at the second operating state until the total duration for which the power conversion circuit is switched from the first operating state to the second operating state and maintained at the second operating state reaches a first duration;
wherein for switching the power conversion circuit back to the first operating state, the control unit is further configured to:
switch the power conversion circuit back to the first operating state when the first duration expires, and
maintain the power conversion circuit at the first operating state until the MPPT cycle ends, wherein the total duration for which the power conversion circuit is switched from the second operating state to the first operating state and maintained at the first operating state is a second duration, wherein the first duration is less than the second duration.

3. The power conversion apparatus according to claim 1, wherein an initial state of the power conversion circuit at a start time instant of the MPPT cycle is a third operating state;
the control unit is further configured to:
switch, at the start time instant of the MPPT cycle, the power conversion circuit from the third operating state to the first operating state; and
maintain, in response to the power conversion circuit in the first operating state greater than the power conversion circuit in the third operating state in at least one of the input power and the output power, the power conversion circuit at the first operating state until a total duration for which the power conversion circuit is switched from the third operating state to the first operating state and maintained at the first operating state reaches a third duration;
for switching the power conversion circuit from the first operating state to the second operating state, the control unit is further configured to:
switch the power conversion circuit from the first operating state to the second operating state when the third duration expires; and
maintain, in response to the power conversion circuit in the second operating state less than the power conversion circuit in the first operating state in at least one of the input power and the output power, the power conversion circuit at the second operating state until the total duration for which the power conversion circuit is switched from the first operating state to the second operating state and maintained at the second operating state reaches a fourth duration; and
for switching the power conversion circuit back to the first operating state, the control unit is further configured to:
switch the power conversion circuit back to the first operating state when the fourth duration expires; and
maintain the power conversion circuit at the first operating state until the MPPT cycle ends, wherein the total duration for which the power conversion circuit is switched from the second operating state to the first operating state and is maintained at the first operating state is a fifth duration, and the fourth duration is less than at least one of the fifth duration and the third duration.

4. The power conversion apparatus according to claim 3, wherein
the voltages of the input end of the power conversion circuit sequentially increase when the power conversion circuit operates in the third operating state, the first operating state and the second operating state, respectively; or
the voltages of the input end of the power conversion circuit sequentially decrease when the power conversion circuit operates in the third operating state, the first operating state and the second operating state, respectively.

5. The power conversion apparatus according to any one of claims 1 to 4, wherein
the power conversion circuit is a direct current-direct current (DC-DC) conversion circuit or an inverter circuit.

6. A maximum power point tracking (MPPT) method, comprising:
switching a power conversion circuit from a first operating state to a second operating state within an MPPT cycle, wherein the power conversion circuit is configured to connect a photovoltaic module, and switching of an operating state of the power conversion circuit regulates a voltage of an input end of the power conversion circuit; and
switching, in response to the power conversion circuit in the second operating state less than the power conversion circuit in the first operating state in at least one of an input power and an output power, the power conversion circuit back to the first operating state, wherein a total duration for which the power conversion circuit is switched from the first operating state to the second operating state and maintained at the second operating state is less than a total duration for which the power conversion circuit is switched from the second operating state to the first operating state and maintained at the first operating state.

7. The MPPT method according to claim 6, wherein the first operating state is an initial state of the power conversion circuit at a start time instant of the MPPT cycle;
the switching the power conversion circuit from the first operating state to the second operating state comprises:
switching the power conversion circuit from the first operating state to the second operating state at the start time instant of the MPPT cycle; and
maintaining, in response to the power conversion circuit in the second operating state less than the power conversion circuit in the first operating state in at least one of the input power and the output power, the power conversion circuit at the second operating state until the total duration for which the power conversion circuit is switched from the first operating state to the second operating state and maintained at the second operating state reaches a first duration; and
the switching the power conversion circuit back to the first operating state comprises:
switching the power conversion circuit back to the first operating state when the first duration expires; and
maintaining the power conversion circuit at the first operating state until the MPPT cycle ends, wherein the total duration for which the power conversion circuit is switched from the second operating state to the first operating state and maintained at the first operating state is a second duration, wherein the first duration is less than the second duration.

8. The MPPT method according to claim 6, wherein an initial state of the power conversion circuit at a start time instant of the MPPT cycle is a third operating state, and the MPPT method further comprises:
switching, at the start time instant of the MPPT cycle, the power conversion circuit from the third operating state to the first operating state; and
maintaining, in response to the power conversion circuit in the first operating state greater than the power conversion circuit in the third operating state in at least one of the input power and the output power, the power conversion circuit at the first operating state until a total duration for which the power conversion circuit is switched from the third operating state to the first operating state and maintained at the first operating state reaches a third duration;
wherein the switching the power conversion circuit from the first operating state to the second operating state comprises:
switching the power conversion circuit from the first operating state to the second operating state when the third duration expires; and
maintaining, in response to the power conversion circuit in the second operating state less than the power conversion circuit in the first operating state in at least one of the input power and the output power, the power conversion circuit at the second operating state until the total duration for which the power conversion circuit is switched from the first operating state to the second operating state and maintained at the second operating state reaches a fourth duration;
wherein the switching the power conversion circuit back to the first operating state comprises:
switching the power conversion circuit back to the first operating state when the fourth duration expires; and
maintaining the power conversion circuit at the first operating state until the MPPT cycle ends, wherein the total duration for which the power conversion circuit is switched from the second operating state to the first operating state and is maintained at the first operating state is a fifth duration, and the fourth duration is less than at least one of the fifth duration and the third duration.

9. The MPPT method according to claim 8, wherein
the voltages of the input end of the power conversion circuit sequentially increase when the power conversion circuit operates in the third operating state, the first operating state and the second operating state, respectively; or
the voltages of the input end of the power conversion circuit sequentially decrease when the power conversion circuit operates in the third operating state, the first operating state and the second operating state, respectively.

10. The MPPT method according to claim 8, wherein
the power conversion circuit is a direct current-direct current (DC-DC) conversion circuit or an inverter circuit.

11. A photovoltaic system, comprising the power conversion apparatus according to any one of claims 1 to 5.

12. A control apparatus, comprising:
a memory, configured to store a program, instructions or codes; and
a processor, configured to execute the program, the instructions or the codes in the memory to perform the MPPT method according to any one of claims 6 to 10.

13. A storage medium, storing a computer program, wherein
the computer program performs, when being loaded by a processor, the MPPT method according to any one of claims 6 to 10.
